# EUROPEAN PATENT APPLICATION

(11) **EP 4 693 655 A1**
(43) Date of publication of application: **11.02.2026**
(21) Application number: 23930877.8
(22) Date of filing: 04.12.2023
(51) Int. Cl.: H01M 50/242, H01M 50/249

(54) **HOUSING BODY AND BATTERY MODULE**

(30) Priority: 24.03.2023 JP 2023048674
(71) Applicant: AESC Japan Ltd., Yokohama-shi, Kanagawa 220-0012 (JP)
(72) Inventor: SHAO, Yongzheng, Zama-shi, Kanagawa 252-0012 (JP); MONNO, Dai, Zama-shi, Kanagawa 252-0012 (JP); FU, Yongliang, Zama-shi, Kanagawa 252-0012 (JP)
(74) Representative: Mathys & Squire
(86) International application number: PCT/JP2023/043253
(87) International publication number: WO 2024/202252

(57) **Abstract**

A housing body (20) includes a front cover (210) and a side cover (230) that are joined to each other via a joining part (200) and cover at least a part of a battery cell (100). The side cover (230) includes a partition wall (236) separating a lower hollow space (237) and an upper hollow space (238) inside the side cover (230) in a predetermined direction. The partition wall (236) and opposite ends of the joining part (200) in the predetermined direction are displaced from each other in the predetermined direction.

## Description

### TECHNICAL FIELD

The present invention relates to a housing body and a battery module.

### BACKGROUND ART

In recent years, a variety of battery modules that include a plurality of battery cells have been developed. The plurality of battery cells is electrically connected by combination of in series and in parallel. The battery module includes a housing body that houses the plurality of battery cells.

Patent Document 1 describes an example of a battery connection module. The battery connection module includes a battery housing case. A flange protrudes from the outer lateral surface of the battery housing case.

Patent Document 2 describes an example of a structure for mounting a battery on a vehicle. This structure includes two battery modules arranged in the vehicular width direction and a load transmitting member positioned in the gap between the two battery modules. The load transmitting member defines two hollow parts extending in the vehicular front-rear direction.

### RELATED DOCUMENT

### PATENT DOCUMENT

Patent Document 1: Japanese Patent Application Publication No. 2020-109741
Patent Document 2: Japanese Patent Application Publication No. 2017-197047

### DISCLOSURE OF THE INVENTION

### TECHNICAL PROBLEM

A housing body that houses a battery cell may include a plurality of covers joined to each other via a joining part formed by a joining method such as laser welding. At least one of the plurality of covers may include a partition wall separating a plurality of hollow spaces inside the cover. However, when the cover includes the partition wall, it may be difficult to reduce the damage to the joining part of the plurality of covers due to impact received by the covers.

An example of the object of the present invention is to reduce damage to the joining part of the plurality of covers of the housing body. Other objects of the present invention will be clarified by description of the present specification.

### SOLUTION TO PROBLEM

An aspect of the present invention is as follows.
[1] A housing body including
   a plurality of covers joined to each other via a joining part and covering at least a part of a battery cell, wherein
   at least one cover of the plurality of covers includes a partition wall separating a plurality of hollow spaces inside the at least one cover in a predetermined direction, and
   the partition wall and opposite ends of the joining part in the predetermined direction are displaced from each other in the predetermined direction.
[2] The housing body according to [1], wherein
   the at least one cover further includes a flange protruding toward an opposite side of the battery cell, and
   the partition wall and the flange are displaced from each other in the predetermined direction.
[3] The housing body according to [2], wherein
   the partition wall has an end part located closer to the joining part than an end part of the flange.
[4] The housing body according to [1], wherein
   the at least one cover further includes a flange protruding toward an opposite side of the battery cell, and
   the partition wall has an end part located closer to the joining part than an end part of the flange.
[5] A housing body including
   a plurality of covers joined to each other via a joining part and covering at least a part of a battery cell, wherein
   at least one cover of the plurality of covers includes a partition wall separating a plurality of hollow spaces inside the at least one cover in a predetermined direction and a flange protruding toward an opposite side of the battery cell, and
   the partition wall and the flange are displaced from each other in the predetermined direction.
[6] The housing body according to [5], wherein
   the partition wall has an end part located closer to the joining part than an end part of the flange.
[7] A housing body including
   a plurality of covers joined to each other via a joining part and covering at least a part of a battery cell, wherein
   at least one cover of the plurality of covers includes a partition wall separating a plurality of hollow spaces inside the at least one cover in a predetermined direction and a flange protruding toward an opposite side of the battery cell, and
   the partition wall has an end part located closer to the joining part than an end part of the flange.
[8] A battery module including:
   the housing body according to any one of [1] to [7];
      and
   the battery cell housed in the housing body.

### ADVANTAGEOUS EFFECTS OF INVENTION

According to the aspect of the present invention, damage to the joining part of the plurality of covers of the housing body can be reduced.

### BRIEF DESCRIPTION OF THE DRAWINGS

[Fig. 1] A perspective view of a battery module according to an embodiment.
[Fig. 2] A perspective view of a cell group with a housing body removed.
[Fig. 3] An enlarged perspective view of the front left side part of the battery module according to the embodiment.
[Fig. 4] An enlarged front view of the left end part of the battery module according to the embodiment.

### DESCRIPTION OF EMBODIMENTS

In the following, an embodiment of the present invention is described with reference to the drawings. In all the drawings, a similar component is denoted with a similar reference sign and description thereof is omitted as appropriate.

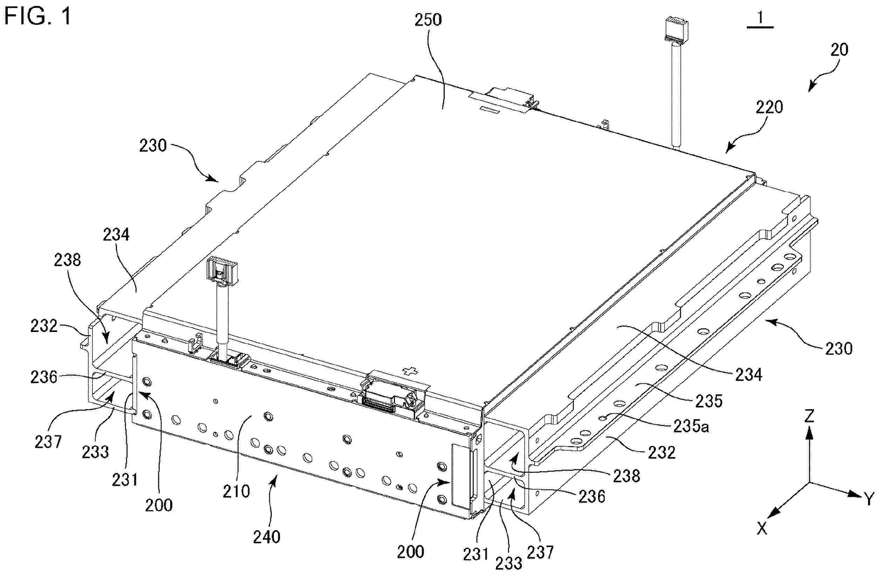

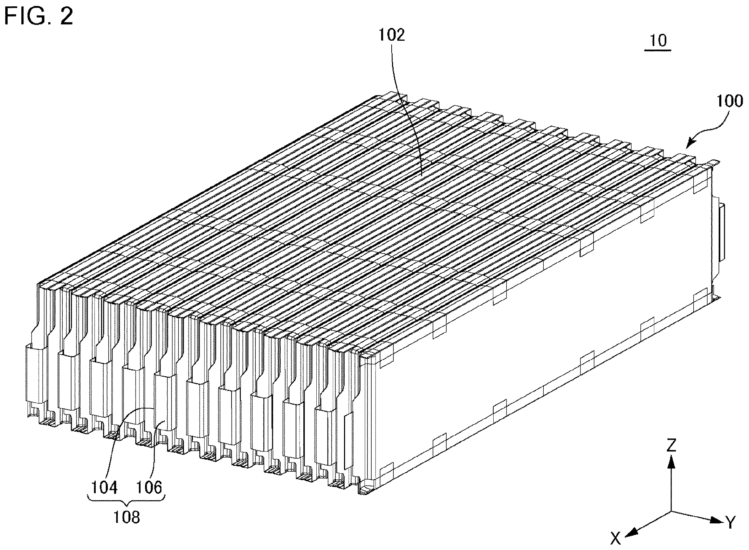

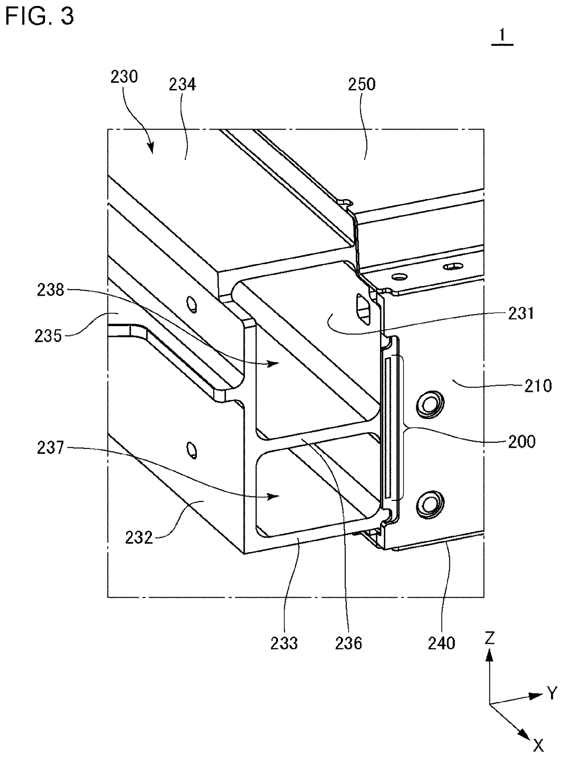

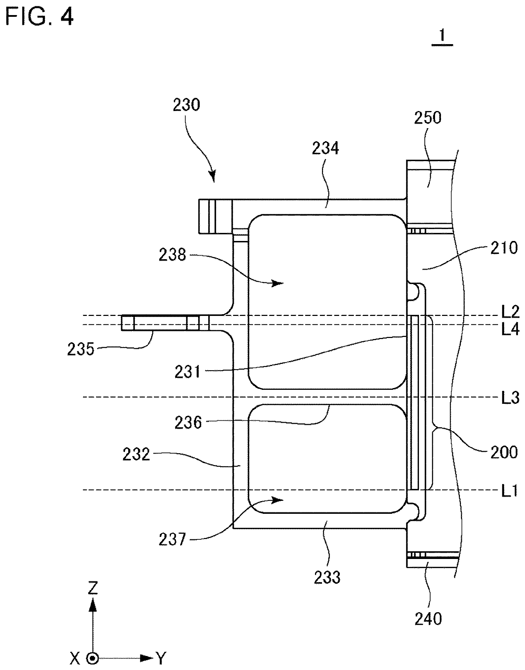

Fig. 1 is a perspective view of a battery module 1 according to the embodiment. Fig. 2 is a perspective view of a cell group 10 with a housing body 20 removed. Fig. 3 is an enlarged perspective view of the front left side part of the battery module 1 according to the embodiment. Fig. 4 is an enlarged front view of the left end part of the battery module 1 according to the embodiment.

For an explanatory purpose, the arrows indicating the X direction, the Y direction, and the Z direction are illustrated in each of the drawings. In the following, unless otherwise specified, the tip end side of the arrow indicating the X direction is a front side of the battery module 1 and the base end side of the arrow indicating the X direction is a rear side of the battery module 1. The Y direction is orthogonal to the X direction. The Y direction is a left-right direction of the battery module 1. In the following, unless otherwise specified, the tip end side of the arrow indicating the Y direction is a right side of the battery module 1 and the base end side of the arrow indicating the Y direction is a left side of the battery module 1. The Z direction is orthogonal to both the X direction and the Y direction. The Z direction is an up-down direction of the battery module 1. In the following, unless otherwise specified, the tip end side of the arrow indicating the Z direction is an upper side of the battery module 1 and the base end side of the arrow indicating the Z direction is a lower side of the battery module 1. In the following, as necessary, a plane perpendicular to the X direction is referred to as a YZ plane, a plane perpendicular to the Y direction is referred to as a ZX plane, and a plane perpendicular to the Z direction is referred to as an XY plane. The relationship between each of the X direction, the Y direction, and the Z direction, and each of a front-rear direction, the left-right direction, and the up-down direction of the battery module 1 is not limited to the above example.

The battery module 1 is described with reference to Figs. 1 and 2. The battery module 1 includes the cell group 10 and the housing body 20.

As illustrated in Fig. 2, the cell group 10 includes a plurality of battery cells 100. The plurality of battery cells 100 is stacked in the Y direction. The longitudinal direction of each of the battery cells 100 is generally parallel to the X direction. The short direction of each of the battery cells 100 is generally parallel to the Z direction. The thickness direction of each of the battery cells 100 is generally parallel to the Y direction. The shape of each of the battery cells 100 is not limited to this example.

Each of the battery cells 100 includes an unillustrated battery element, an exterior material 102, a positive electrode tab 104, and a negative electrode tab 106. In one example, the battery element includes an unillustrated plurality of positive electrodes and an unillustrated plurality of negative electrodes alternately stacked in the Y direction and an unillustrated separator placed between the positive electrode and the negative electrode adjacent in the Y direction. The exterior material 102 seals the battery element and an unillustrated electrolytic liquid. The positive electrode tab 104 is electrically connected to the positive electrode of the battery element. The positive electrode tab 104 is drawn from one of the X-directional opposite sides of the exterior material 102. The negative electrode tab 106 is electrically connected to the negative electrode of the battery element. The negative electrode tab 106 is drawn from the other of the X-directional opposite sides of the exterior material 102. However, the configuration of each of the battery cells 100 is not limited to this example.

Each of the battery cells 100 may be a solid-state battery. In the solid-state battery, a solid electrolyte layer is provided in a part corresponding to a separator. The solid-state battery does not include an electrolytic liquid. In the following, unless otherwise specified, each of the battery cells 100 is described as a battery cell including an electrolytic liquid.

In the embodiment, the plurality of battery cells 100 is electrically connected by combination of in series and in parallel. Specifically, cell groups each including at least two battery cells 100 adjacent to each other in the Y direction and connected in parallel are stacked in the Y direction and connected in series. In front of the cell group 10, the positive electrode tabs 104 drawn from the parallel-connected battery cells 100 of a cell group and the negative electrode tabs 106 drawn from the parallel-connected battery cells 100 of another cell group are electrically connected to each other to form a tab connection part 108 including the positive electrode tabs 104 and the negative electrode tabs 106. In the tab connection part 108, the positive electrode tab 104 and the negative electrode tab 106 are joined to each other, for example, by laser welding. A tab group is similarly formed also behind the cell group 10. Thus, the plurality of cell groups is connected in series from the above cell group placed at one Y-directional end side of the cell group 10 to the above cell group placed at the other Y-directional end side of the cell group 10.

Electrical connection of the plurality of battery cells 100 is not limited to the above example. For example, single battery cells 100 may be connected in series to configure the cell group 10.

As illustrated in Fig. 1, the housing body 20 includes a front cover 210, a rear cover 220, a pair of side covers 230, a pair of flanges 235, a lower cover 240, and an upper cover 250.

The front cover 210 covers the front part of the cell group 10. The front cover 210 has a generally plate shape having a longitudinal direction generally parallel to the Y direction and is positioned generally parallel to the YZ plane. Specifically, the front cover 210 has a generally rectangle shape having a pair of long sides generally parallel to the Y direction and a pair of short sides generally parallel to the Z direction. However, the shape of the front cover 210 is not limited to this example. The front cover 210 includes a metal plate and a resin provided on the metal plate, for example.

The rear cover 220 covers the rear part of the cell group 10. The rear cover 220 has a generally plate shape having a longitudinal direction generally parallel to the Y direction and is positioned generally parallel to the YZ plane. Specifically, the rear cover 220 has a generally rectangle shape having a pair of long sides generally parallel to the Y direction and a pair of short sides generally parallel to the Z direction. However, the shape of the rear cover 220 is not limited to this example. The rear cover 220 includes a metal plate and a resin provided on the metal plate, for example.

A pair of side covers 230 covers both left and right sides of the cell group 10. The right side cover 230 covers the right side of the cell group 10. The left side cover 230 covers the left side of the cell group 10. Each of the side covers 230 includes a metal plate and a resin provided on the metal plate, for example. Each of the side covers 230 is formed by extrusion molding, for example. Each of the side covers 230 has a generally frame shape having a longitudinal direction to the Y direction.

The lower cover 240 covers the lower part of the cell group 10. The lower cover 240 has a generally plate shape positioned generally parallel to the XY plane. Specifically, the lower cover 240 has a generally quadrilateral shape having a pair of sides generally parallel to the X direction and another pair of sides generally parallel to the Y direction. However, the shape of the lower cover 240 is not limited to this example. The lower cover 240 includes a metal plate and a resin provided on the metal plate, for example.

The upper cover 250 covers the upper part of the cell group 10. The upper cover 250 has a generally plate shape positioned generally parallel to the XY plane. Specifically, the upper cover 250 has a generally quadrilateral shape having a pair of sides generally parallel to the X direction and another pair of sides generally parallel to the Y direction. However, the shape of the upper cover 250 is not limited to this example. The upper cover 250 includes a metal plate and a resin provided on the metal plate, for example.

The right side cover 230 is described with reference to Fig. 1. In the following, unless otherwise specified, the description of the side cover 230 referring to Fig. 1 relates to the right side cover 230. Unless otherwise specified, the description of the right side cover 230 referring to Fig. 1 also applies to the left side cover 230, except that the pair of side covers 230 is generally symmetrical.

The side cover 230 includes an inner plate 231, an outer plate 232, a lower plate 233, an upper plate 234, a flange 235, and a partition wall 236. The side cover 230 defines a lower hollow space 237 and an upper hollow space 238.

The inner plate 231 covers the right side of the cell group 10. The inner plate 231 has a generally plate shape having a longitudinal direction generally parallel to the X direction and is positioned generally parallel to the ZX plane. Specifically, the inner plate 231 has a generally rectangle shape having a pair of long sides extending generally parallel to the X direction and a pair of short sides extending generally parallel to the Z direction. However, the shape of the inner plate 231 is not limited to this example. The front end part of the inner plate 231 and the right end part of the front cover 210 are joined to each other via a joining part 200. The joining part 200 is formed by laser-welding the front end part of the inner plate 231 and the right end part of the front cover 210, for example. The rear end part of the inner plate 231 and the right end part of the rear cover 220 are also joined to each other via an unillustrated joining part similar to the joining part 200 between the front end part of the inner plate 231 and the right end part of the front cover 210.

The outer plate 232 is located outside the inner plate 231 with respect to the cell group 10. The outer plate 232 has a generally plate shape having a longitudinal direction generally parallel to the X direction and is positioned generally parallel to the ZX plane. Specifically, the outer plate 232 has a generally rectangle shape having a pair of long sides extending generally parallel to the X direction and a pair of short sides extending generally parallel to the Z direction. However, the shape of the outer plate 232 is not limited to this example.

The lower plate 233 is located between the lower end part of the inner plate 231 and the lower end part of the outer plate 232. The lower plate 233 has a generally plate shape having a longitudinal direction generally parallel to the X direction and is positioned generally parallel to the XY plane. Specifically, the lower plate 233 has a generally rectangle shape having a pair of long sides extending generally parallel to the X direction and a pair of short sides extending generally parallel to the Y direction. However, the shape of the lower plate 233 is not limited to this example. The Y-directional opposite end parts of the lower plate 233 are connected to the Z-directional lower end part of the inner plate 231 and the Z-directional lower end part of the outer plate 232.

The upper plate 234 is located between the upper end part of the inner plate 231 and the upper end part of the outer plate 232. The upper plate 234 has a generally plate shape having a longitudinal direction generally parallel to the X direction and is positioned generally parallel to the XY plane. Specifically, the upper plate 234 has a generally rectangle shape having a pair of long sides extending generally parallel to the X direction and a pair of short sides extending generally parallel to the Y direction. However, the shape of the upper plate 234 is not limited to this example. The Y-directional opposite end parts of the upper plate 234 are connected to the Z-directional upper end part of the inner plate 231 and the Z-directional upper end part of the outer plate 232.

The flange 235 protrudes from the outer surface of the outer plate 232. The flange 235 has a generally plate shape having a longitudinal direction generally parallel to the X direction and is positioned generally parallel to the XY plane. The flange 235 defines a plurality of insertion holes 235a. The plurality of insertion holes 235a is aligned generally parallel to the X direction. A fastener such as a bolt can be inserted generally parallel to the Z direction into each of the insertion holes 235a. Thus, the flange 235 can be fixed to an external member of the battery module 1 by inserting the fastener such as a bolt into each of the insertion holes 235a.

The partition wall 236 separates the lower hollow space 237 and the upper hollow space 238 in the Z direction. The partition wall 236 has a generally plate shape having a longitudinal direction generally parallel to the X direction and is positioned generally parallel to the XY plane. The partition wall 236 has a generally rectangle shape having a pair of long sides generally parallel to the X direction and a pair of short sides generally parallel to the Y direction. However, the shape of the partition wall 236 is not limited to this example. The Y-directional opposite end parts of the partition wall 236 are connected to the part between the Z-directional upper and lower end parts of the inner plate 231 and the part between the Z-directional upper and lower end parts of the outer plate 232.

The lower hollow space 237 is located below the partition wall 236. In the example illustrated in Fig. 3, the cross section of the lower hollow space 237 perpendicular to the X direction is generally quadrilateral. Specifically, the left inner surface, the right inner surface, the lower inner surface, and the upper inner surface of the lower hollow space 237 of the right side cover 230 are respectively defined by the part of the right side surface of the inner plate 231 between the left end part of the lower plate 233 and the left end part of the partition wall 236, the part of the left side surface of the outer plate 232 between the right end part of the lower plate 233 and the right end part of the partition wall 236, the upper surface of the lower plate 233, and the lower surface of the partition wall 236. Thus, the lower hollow space 237 extends generally parallel to the X direction.

The upper hollow space 238 is located above the partition wall 236. In the example illustrated in Fig. 3, the cross section of the upper hollow space 238 perpendicular to the X direction is generally quadrilateral. Specifically, the left inner surface, the right inner surface, the lower inner surface and the upper inner surface of the upper hollow space 238 of the right side cover 230 are respectively defined by the part of the right side surface of the inner plate 231 between the left end part of the upper plate 234 and the left end part of the partition wall 236, the part of the left side surface of the outer plate 232 between the right end part of the upper plate 234 and the right end part of the partition wall 236, the upper surface of the partition wall 236, and the lower surface of the upper plate 234. Thus, the upper hollow space 238 extends generally parallel to the X direction.

In the embodiment, the lower hollow space 237 and the upper hollow space 238 exist inside each of the side covers 230. Thus, the weight of each of the side covers 230 can be reduced and a material cost for each of the side covers 230 can be reduced as compared to when the lower hollow space 237 and the upper hollow space 238 are solid. In addition, the lower hollow space 237 and the upper hollow space 238 can be used for an application such as a routing wiring such as a cable or a passage for a liquid coolant.

In the embodiment, the partition wall 236 separates the lower hollow space 237 and the upper hollow space 238. Thus, the strength of the side cover 230 can be improved as compared to when the partition wall 236 does not exist and the lower hollow space 237 and the upper hollow space 238 are communicated to each other to form a hollow space. In the embodiment, a hollow space between the lower plate 233 and the upper plate 234 is separated in the Z direction into two hollow spaces by one partition wall. However, the hollow space between the lower plate 233 and the upper plate 234 may be separated in the Z direction into three or more hollow spaces by two or more partition walls.

The left side cover 230 is described with reference to Fig. 3. In the following, unless otherwise specified, the following description of the side cover 230 referring to Fig. 3 relates to the left side cover 230. Unless otherwise specified, the description of the left side cover 230 referring to Fig. 3 also applies to the right side cover 230, except that the pair of side covers 230 is generally symmetrical.

The front end of the inner plate 231, the front end of the outer plate 232, the front end of the lower plate 233, and the front end of the partition wall 236 are located forward the front end of the upper plate 234 in the X direction. The front end of the inner plate 231, the front end of the outer plate 232, the front end of the lower plate 233, and the front end of the partition wall 236 are generally flush. Specifically, the X-directional position of each of the front end of the inner plate 231, the front end of the outer plate 232, the front end of the lower plate 233, and the front end of the partition wall 236 is generally aligned in the X direction. The front end of the flange 235 is located rearward the front end of the inner plate 231, the front end of the outer plate 232, the front end of the lower plate 233, the front end of the upper plate 234, and the front end of the partition wall 236 in the X direction. Therefore, the inner plate 231, the outer plate 232, the upper plate 234, and the partition wall 236 have front end parts placed closer to the joining part 200 than the front end part of the flange 235 in the X direction.

In the example illustrated in Fig. 3, the strength of the front end part of the side cover 230 can be reinforced by the partition wall 236 to improve the strength of the side cover 230 as compared to when the X-directional position of the front end of the partition wall 236 is displaced rearward the X-directional position of the front cover 210 such that the X-directional position of the front end of the partition wall 236 and the X-directional position of the front end of the flange 235 are aligned in the X direction. In the example illustrated in Fig. 3, the impact received by the flange 235 can be prevented from being transmitted to the joining part 200 via the partition wall 236 as compared to when the X-directional position of the front end of the flange 235 and the X-directional position of the front cover 210 are aligned in the X direction such that the X-directional position of the front end of the partition wall 236 and the X-directional position of the flange 235 are aligned in the X direction. Therefore, in the example illustrated in Fig. 3, the damage to the joining part 200 can be reduced as compared to when the X-directional position of the front end of the partition wall 236 and the X-directional position of the front end of the flange 235 are aligned in the X direction.

As illustrated in Fig. 1, in the right side cover 230, the front end of the inner plate 231, the front end of the outer plate 232, the front end of the lower plate 233, the front end of the upper plate 234, and the front end of the partition wall 236 are generally flush. In the right side cover 230, the inner plate 231, the outer plate 232, the upper plate 234, and the partition wall 236 also have front end parts located closer to the joining part 200 than the front end of the flange 235 in the X direction.

The left side cover 230 is described with reference to Fig. 4. In the following, unless otherwise specified, the following description of the side cover 230 referring to Fig. 4 relates to the left side cover 230. Unless otherwise specified, the description of the left side cover 230 referring to Fig. 4 also applies to the right side cover 230, except that the pair of side covers 230 is generally symmetrical.

For the purpose of description, Fig. 4 illustrates a first imaginary line L1, a second imaginary line L2, a third imaginary line L3, and a fourth imaginary line L4. The first imaginary line L1 passes through the lower end of the joining part 200 generally parallel to the Y direction. The second imaginary line L2 passes through the upper end of the joining part 200 generally parallel to the Y direction. The third imaginary line L3 passes through the Z-directional center part of the partition wall 236 generally parallel to the Y direction. The fourth imaginary line L4 passes through the Z-directional center part of the flange 235 generally parallel to the Y direction.

The joining part 200 has a longitudinal direction generally parallel to the Z direction. In the example illustrated in Fig. 4, the Z-directional center part of the joining part 200 is displaced downward in the Z direction from the Z-directional center part of the inner plate 231. However, the Z-directional center part of the joining part 200 may be generally aligned with the Z-directional center part of the inner plate 231 or may be displaced upward from the Z-directional center part of the inner plate 231 in the Z direction.

The flange 235 is located closer to the left end of the upper plate 234 than the left end of the lower plate 233 in the Z direction. In other words, the flange 235 is located above the center part of the outer plate 232 in the Z direction. In the example illustrated in Fig. 4, the Z-directional position of the flange 235 is displaced downward in the Z direction from the Z-directional position of the Z-directional upper end of the joining part 200. However, the relationship between the Z-directional position of the flange 235 and the position of the Z-directional upper end of the joining part 200 is not limited to this example.

The partition wall 236 is located closer to the lower plate 233 than the upper plate 234 in the Z direction. Thus, the length of the upper hollow space 238 in the Z direction is longer than the length of the lower hollow space 237 in the Z direction. However, the position of the partition wall 236 in the Z direction is not limited to this example. For example, the partition wall 236 may be located at an equal distance from the lower plate 233 and the upper plate 234 in the Z direction. Alternatively, the partition wall 236 may be placed closer to the upper plate 234 than the lower plate 233 in the Z direction.

In the example illustrated in Fig. 4, the partition wall 236 and the Z-directional opposite ends of the joining part 200 are displaced from each other in the Z direction. Specifically, the partition wall 236 is displaced upward from the Z-directional lower end of the joining part 200 and displaced downward from the Z-directional upper end of the joining part 200. If the partition wall 236 is aligned in the Z direction with one of the Z-directional ends of the joining part 200, the shock received by the flange 235 may be transmitted to the one Z-directional end of the joining part 200 via the partition wall 236. The joint strength of the joining part 200 tends to be lower at the Z-directional opposite ends of the joining part 200 than at a part other than the Z-directional opposite ends of the joining part 200. Accordingly, if the partition wall 236 is aligned in the Z direction with one of the Z-directional ends of the joining part 200, the shock received by the flange 235 may be directly transmitted to the one Z-directional end of the joining part 200 via the partition wall 236. Thus, if the partition wall 236 is aligned in the Z direction with one of the Z-directional ends of the joining part 200, the damage to the joining part 200 may be difficult to reduce. In the example illustrated in Fig. 4, on the other hand, even if the shock received by the flange 235 is transmitted to the partition wall 236, the shock is not directly transmitted from the partition wall 236 to the both Z-directional ends of the joining part 200. Therefore, the damage to the joining part 200 can be reduced in the example illustrated in Fig. 4, as compared to when the partition wall 236 is aligned in the Z direction with one of the Z-directional ends of the joining part 200.

The structure for displacing the partition wall 236 and the Z-directional opposite ends of the joining part 200 from each other in the Z direction is not limited to the example illustrated in Fig. 4. For example, the partition wall 236 may be displaced downward from the Z-directional lower end of the joining part 200 or may be displaced upward from the Z-directional upper end of the joining part 200.

In the example illustrated in Fig. 4, the partition wall 236 and the flange 235 are displaced from each other in the Z direction. Specifically, the partition wall 236 is displaced downward in the Z direction from the flange 235. Thus, it can be less likely that the shock received by the flange 235 is transmitted to the partition wall 236 than when the partition wall 236 and the flange 235 are aligned in the Z direction. Therefore, the shock received by the flange 235 can be less likely to be transmitted to the joining part 200 via the partition wall 236 in the example illustrated in Fig. 4 than in the previously described case. Thus, the damage to the joining part 200 can be reduced in the example illustrated in Fig. 4, as compared to the previously described case.

The structure for displacing the partition wall 236 and the flange 235 from each other in the Z direction is not limited to the example illustrated in Fig. 4. For example, the partition wall 236 may be displaced upward from the flange 235 in the Z direction.

The embodiment of the present invention has been described with reference to the drawings, but these are examples of the present invention and various configurations other than those described above may be employed.

For example, in the embodiment, one pair of side covers 230 of the plurality of covers constituting the housing body 20 defines the hollow space. However, the other covers constituting the housing body 20, such as the front cover 210 and the rear cover 220 may define a hollow space in the same way as the one pair of side covers 230.

This application claims priority based on Japanese patent application No. 2023-048674, filed on March 24, 2023, the disclosure of which is incorporated herein in its entirety by reference.

### REFERENCE SIGNS LIST

1 Battery module, 10 Cell group, 20 Housing body, 100 Battery cell, 102 Exterior material, 104 Positive electrode tab, 106 Negative electrode tab, 108 Tab connection part, 200 Joining part, 210 Front cover, 220 Rear cover, 230 Side cover, 231 Inner plate, 232 Outer plate, 233 Lower plate, 234 Upper plate, 235 Flange, 235a Insertion hole, 236 Partition wall, 237 Lower hollow space, 238 Upper hollow space, 240 Lower cover, 250 Upper cover, L1 First imaginary line, L2 Second imaginary line, L3 Third imaginary line, L4 Fourth imaginary line

## Claims

1. A housing body comprising
a plurality of covers joined to each other via a joining part and covering at least a part of a battery cell, wherein
at least one cover of the plurality of covers includes a partition wall separating a plurality of hollow spaces inside the at least one cover in a predetermined direction, and
the partition wall and opposite ends of the joining part in the predetermined direction are displaced from each other in the predetermined direction.

2. The housing body according to claim 1, wherein
the at least one cover further includes a flange protruding toward an opposite side of the battery cell, and
the partition wall and the flange are displaced from each other in the predetermined direction.

3. The housing body according to claim 2, wherein
the partition wall has an end part located closer to the joining part than an end part of the flange.

4. The housing body according to claim 1, wherein
the at least one cover further includes a flange protruding toward an opposite side of the battery cell, and
the partition wall has an end part located closer to the joining part than an end part of the flange.

5. A housing body comprising
a plurality of covers joined to each other via a joining part and covering at least a part of a battery cell, wherein
at least one cover of the plurality of covers includes a partition wall separating a plurality of hollow spaces inside the at least one cover in a predetermined direction and a flange protruding toward an opposite side of the battery cell, and
the partition wall and the flange are displaced from each other in the predetermined direction.

6. The housing body according to claim 5, wherein
the partition wall has an end part located closer to the joining part than an end part of the flange.

7. A housing body comprising
a plurality of covers joined to each other via a joining part and covering at least a part of a battery cell, wherein
at least one cover of the plurality of covers includes a partition wall separating a plurality of hollow spaces inside the at least one cover in a predetermined direction and a flange protruding toward an opposite side of the battery cell, and
the partition wall has an end part located closer to the joining part than an end part of the flange.

8. A battery module comprising:
the housing body according to any one of claims 1 to 7; and
the battery cell housed in the housing body.
